# EUROPÄISCHE PATENTSCHRIFT

(11) **EP 1 537 004 B1**
(45) Veröffentlichungstag und Bekanntmachung des Hinweises auf die Patenterteilung: **12.07.2006**
(21) Anmeldenummer: 03747860.9
(22) Anmeldetag: 23.07.2003
(51) Int. Cl.: B62D 6/10

(54) **VORRICHTUNG UND VERFAHREN ZUR DREHMOMENTMESSUNG FÜR EINE ELEKTROMECHANISCHE LENKUNG**
DEVICE AND METHOD FOR MEASURING TORQUE FOR AN ELECTROMECHANICAL STEERING SYSTEM
DISPOSITIF ET PROCEDE DE MESURE DE COUPLE DE ROTATION CON US POUR UNE DIRECTION ELECTROMECANIQUE

(30) Priorität: 06.09.2002 DE 10244068
(43) Veröffentlichungstag der Anmeldung: 08.06.2005
(73) Patentinhaber: Volkswagen AG, 38436 Wolfsburg (DE)
(72) Erfinder: KWASNY, Olaf, 38229 Salzgitter (DE); WAHNSCHAFFE, Nikolaus, 38444 Wolfsburg / Hattorf (DE); MANZ, Holger, 38173 Sickte (DE)
(74) Vertreter: Effert, Bressel und Kollegen
(86) Internationale Anmeldenummer: PCT/EP2003/008038
(87) Internationale Veröffentlichungsnummer: WO 2004/022414

(56) Entgegenhaltungen:
- EP-A- 1 125 822
- EP-A- 1 193 158
- EP-A- 1 225 118

## Beschreibung

Die Erfindung bezieht sich auf eine Vorrichtung und ein Verfahren zur Drehmomentmessung für ein Fahrzeug mit elektromechanischer Lenkung.

Ein Drehmomentsensor ist ein elementarer Bestandteil der elektromechanischen Lenkung, da ohne Ermittlung des Lenkmoments ein unterstützter Betrieb der Lenkung nicht möglich ist. Der Drehmomentsensor ist daher häufig redundant ausgeführt und/oder mit einer Sicherheitsvorrichtung gekoppelt, welche einen Ausfall sofort erkennt und eine sofortige Systemabschaltung bewirkt.

Aus der DE 692 18 405 T2 ist ein Drehmomentsensor für eine elektromechanische Lenkung, umfassend ein Lenkmittel, welches über einen Drehstab mit einem Eingangs- und einem Ausgangswellenteil antriebsmäßig mit einem Lenkmechanismus verbunden ist, und einen elektrischen Servomotor zum Antreiben des Lenkmechanismus, wobei ein Antrieb durch den Servomotor eine relative Rotationsverschiebung zwischen dem Eingangswellenteil und dem Ausgangswellenteil herbeiführt, bekannt, wobei der Drehmomentsensor mindestens zwei unabhängige Signale liefert und die Signale durch einen Vergleich auf Richtigkeit überprüft werden.

Eine redundante Ausführung ist sowohl aus Kostengründen als auch aufgrund von Bauraumbeschränkungen unerwünscht.

In der EP 1125822 A1 ist ein elektromechanisches Lenksystem und -verfahren zum Steuern der Lenkung eines Fahrzeugs offenbart, welches neben einem Lenkrad, das mit einer Lenksäule verbunden ist, auch einen mit der Lenksäule verbundenen Elektromotor zum Aufbringen eines Unterstützungsdrehmoments aufweist. Dabei bezweckt das gezeigte System das Ersetzen eines Drehmomentsensors, indem eine Drehmomentschätzeinrichtung vorgesehen ist, die ein geschätztes Drehmomentsignal als Funktion eines mit einem Lenkwinkelsensor gemessenen Lenkwinkels bestimmt. Dabei erfolgt die Berechnung eines geschätzten Lenkmomentwerts T_{d}est unter Zuhilfenahme eines an der Lenksäule eingestellten Lenkwinkels θ_{c} sowie eines Motorsteuerungs-Eingangsstroms U. Hierzu werden in einem aufwendigen Regelsystem über diverse Übertragungsfunktionen aus den beiden Werten θ_{c} und U die geschätzten Lenkmomente am Lenkrad und am Ritzel berechnet.

Der Erfindung liegt daher das technische Problem zugrunde, eine Vorrichtung und ein Verfahren zur Drehmomentmessung für ein Fahrzeug mit elektromechanischer Lenkung zu schaffen, welche besonders einfach, kostengünstig und mit geringen Bauraumanforderungen realisierbar sind.

Die Lösung des Problems ergibt sich durch die Gegenstände mit den Merkmalen der Ansprüche 1 und 6. Weitere vorteilhafte Ausgestaltungen der Erfindung ergeben sich aus den Unteransprüchen.

Die elektromechanische Lenkung umfaßt eine Sensoreinheit zur Erfassung eines Lenkwinkels und eine Sensoreinheit zur Erfassung eines Rotorwinkels des Servomotors und ist mit einem virtuellen Drehmomentsensor ausgebildet, wobei in dem virtuellen Drehmomentsensor ein Lenkmoment aus dem Lenkwinkel und dem Rotorwinkel ermittelt wird. Durch den virtuellen Drehmomentsensor ist eine Torsion des Drehstabes und damit das Lenkmoment ermittelbar. Der virtuelle Drehmomentsensor ist als Rückfallebene einsetzbar. Durch die vorhandene Rückfallebene ist die sofortige Systemabschaltung bei einem Ausfall des Drehmomentsensors vermeidbar. Dadurch wird die Sicherheit der elektromechanischen Lenkung weiter heraufgesetzt. Denkbar ist es auch, auf den Einsatz eines mechanischen Drehmomentsensors generell zu verzichten und das Drehmoment ausschließlich durch den virtuellen Drehmomentsensor zu ermitteln. Hierfür ist eine hohe Auflösung des Lenkwinkelsensors und/oder des Rotorwinkelsensors notwendig.

In einer weiteren Ausführungsform ist der virtuelle Drehmomentsensor als Recheneinheit ausgebildet. Durch die Recheneinheit sind Signale der Sensoreinheiten digital verarbeitbar. Dabei können bekannte Verfahren der digitalen Signalverarbeitung wie Filter- und/oder Glättungsverfahren eingesetzt werden. Das Ausgangssignal des Drehmomentsensors steht für eine Weiterverarbeitung digital zur Verfügung.

In einer anderen Ausführungsform ist der virtuelle Drehmomentsensor als analoger Schaltkreis ausgebildet. Analoge Ausgangssignale der Sensoreinheiten können ohne Digitalisierung direkt verarbeitet werden. Für eine Weiterverarbeitung des analog ermittelten Drehmoments kann dieses durch bekannte Verfahren digitalisiert werden.

In einer weiteren Ausführungsform ist die Sensoreinheit zur Erfassung des Rotorwinkels als optischer oder magnetostriktiver Encoder ausgebildet. Der Rotorwinkel wird dabei direkt am Servomotor ermittelt. Daneben ist es auch denkbar, den Winkel nach der Übersetzung durch eine Getriebeeinheit zu ermitteln.

In einer weiteren Ausführungsform ist die Sensoreinheit zur Erfassung des Lenkwinkels in dem Lenkmittel integriert. Der beispielsweise von einem Fahrer durch ein Lenkrad aufgebrachte Lenkwunsch ist dadurch präzise meßbar, da lange Übertragungswege vermieden werden. Es ist jedoch auch denkbar, den Sensor an einer anderen Stelle anzubringen, welche aus Bauraumgründen geeigneter ist.

Die Erfindung wird nachfolgend anhand eines bevorzugten Ausführungsbeispiels näher erläutert. Die einzige Figur zeigt:

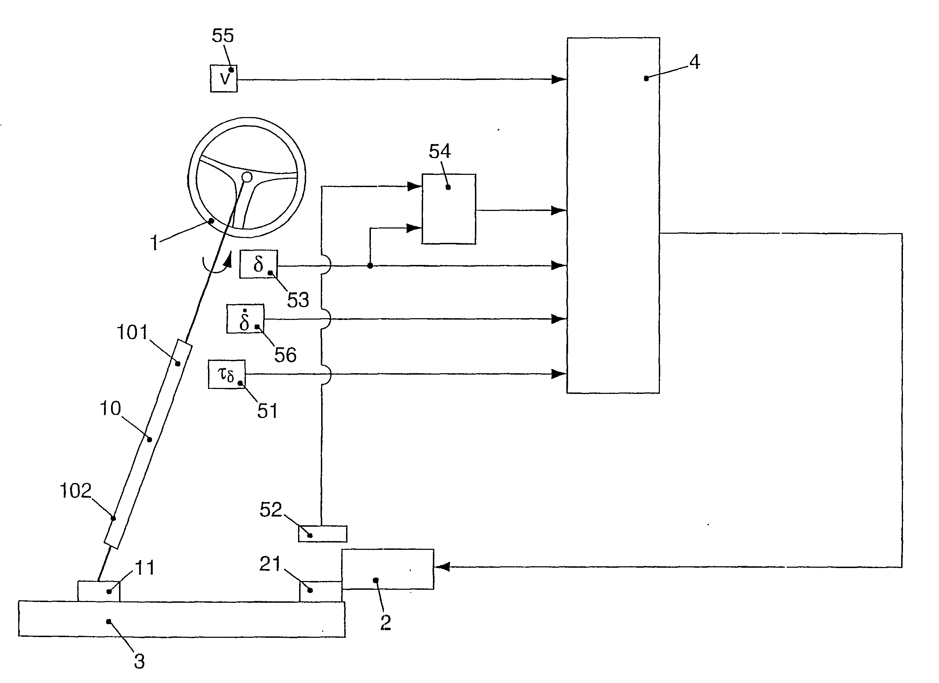

- Fig. 1: eine Prinzipdarstellung einer elektromechanischen Lenkung mit Lenkunterstützung.

Fig. 1 zeigt eine Prinzipdarstellung einer elektromechanischen Lenkung mit Lenkunterstützung, umfassend ein als Lenkrad ausgebildetes Lenkmittel 1 und einen Servomotor 2, die über Getriebe 11, 21 mit einer Zahnstange 3 verbunden sind. Die Zahnstange 3 ist über eine nicht dargestellte bekannte Lenkverbindung steuerbar mit ebenfalls nicht dargestellten lenkbaren Rädern eines Fahrzeugs verbunden. Das Lenkmittel 1 ist mit einem Eingangswellenteil 101 eines Drehstabs 10 wirkverbunden. Ein Ausgangswellenteil 102 des Drehstabs 10 ist über das Getriebe 11 mit der Zahnstange 3 wirkverbunden. Für eine Lenkunterstützung wird zusätzlich durch den Servomotor 2 ein in einer Recheneinheit 4 ermitteltes Unterstützungsmoment aufgebracht. Eine zusätzliche Bewegung der Zahnstange 3 durch den Servomotor 2 führt zu einer Rotationsbewegung des Ausgangswellenteils 102 relativ zu dem Eingangswellenteil 101 und somit zu einem Torsionsmoment an dem Drehstab 10. Das Torsionsmoment des Drehstabs 10 ist durch einen bekannten Drehmomentsensor 51 meßbar. Zusätzlich werden erfindungsgemäß ein Rotorwinkel des Servomotors und ein Lenkwinkel durch Sensoren 52, 53 aufgenommen und daraus in einem virtuellen Drehmomentsensor 54 das anliegende Drehmoment ermittelt, wobei das Drehmoment proportional zu einer Differenz zwischen Lenkwinkel und Rotorwinkel ist. Der virtuelle Drehmomentsensor 54 ist als digitale Recheneinheit und/oder durch einen analogen Schaltkreis realisierbar. Der virtuelle Drehmomentsensor 54 dient als Rückfallebene bei Ausfall des Drehmomentsensors 51. Er kann wie dargestellt als einzelner Baustein ausgebildet sein oder in der Recheneinheit 4 integriert werden. Eine Fahrsituation des Fahrzeugs ist durch Fahrgeschwindigkeit v, Lenkwinkel δ, Lenkwinkelgeschwindigkeit δ° und Lenkmoment τ_{δ} beschreibbar. Die Fahrgeschwindigkeit v wird durch einen Sensor 55, beispielsweise ein Tachometer, ermittelt. Die Lenkwinkelgeschwindigkeit δ° wird durch einen Sensor 56 ermittelt. Es ist jedoch auch denkbar, die Lenkwinkelgeschwindigkeit δ° durch eine Ableitung aus dem Lenkwinkel δ zu ermitteln. Alle aufgenommenen Werte der Fahrsituation werden der Recheneinheit 4 zugeführt. In der Recheneinheit 4 wird anhand dieser Daten ein Unterstützungsmoment ermittelt, welches dem Servomotor 2 zugeführt wird.

## Patentansprüche

1. Vorrichtung zur Drehmomentmessung für eine elektromechanische Lenkung, umfassend ein Lenkmittel (1), welches über einen Drehstab mit einem Eingangs-(101) und einem Ausgangswellenteil (102) antriebsmäßig mit einem Lenkmechanismus verbunden ist, und einen elektrischen Servomotor (2) zum Antreiben des Lenkmechanismus, wobei ein Antrieb durch den Servomotor (2) eine relative Rotationsverschiebung zwischen dem Eingangswellenteil (101) und dem Ausgangswellenteil (102) herbeiführt,
wobei
die elektromechanische Lenkung eine Sensoreinheit (53) zur Erfassung eines Lenkwinkels (δ) sowie eine Sensoreinheit (52) zur Erfassung eines Rotorwinkels des Servomotors (2) umfaßt und
mit einem virtuellen Drehmomentsensor (54) ausgebildet ist, und wobei
in dem virtuellen Drehmomentsensor ein Lenkmoment (τ_{δ}) aus dem Lenkwinkel (δ) und dem Rotorwinkel ermittelbar ist, **dadurch gekennzeichnet, daß** das Lenkmoment (τ_{δ}) aus der Differenz zwischen Lenkwinhel (δ) und Rotorwinkel ermittelt wird.

2. Vorrichtung nach Anspruch 1, **dadurch gekennzeichnet, daß** der virtuelle Drehmomentsensor (54) als Recheneinheit ausgebildet ist.

3. Vorrichtung nach Anspruch 1, **dadurch gekennzeichnet, daß** der virtuelle Drehmomentsensor (54) als analoger Schaltkreis ausgebildet ist.

4. Vorrichtung nach einem der vorgenannten Ansprüche, **dadurch gekennzeichnet, daß** die Sensoreinheit (52) zur Erfassung des Rotorwinkels als optischer oder magnetostriktiver Encoder ausgebildet ist.

5. Vorrichtung nach einem der vorgenannten Ansprüche, **dadurch gekennzeichnet, daß** die Sensoreinheit (53) zur Erfassung des Lenkwinkels (δ) in dem Lenkmittel (1) integriert ist.

6. Verfahren zur Drehmomentmessung für eine elektromechanische Lenkung, umfassend ein Lenkmittel (1), welches über einen Drehstab (10) mit einem Eingangs- (101) und einem Ausgangswellenteil (102) antriebsmäßig mit einem Lenkmechanismus verbunden ist, und einen elektrischen Servomotor (2) zum Antreiben des Lenkmechanismus, wobei ein Antrieb durch den Servomotor (2) eine relative Rotationsverschiebung zwischen dem Eingangswellenteil (101) und dem Ausgangswellenteil (102) herbeiführt,
wobei
die elektromechanische Lenkung eine Sensoreinheit (53) zur Erfassung eines Lenkwinkels (δ), eine Sensoreinheit (52) zur Erfassung eines Rotorwinkels des Servomotors (2) umfaßt und
mit einen virtuellen Drehmomentsensor (54) ausgebildet, und wobei
in dem virtuellen Drehmomentsensor ein Lenkmoment (τ_{δ}) aus dem Lenkwinkel (δ) und dem Rotorwinkel ermittelt wird, **dadurch gekennzeichnet, daß** das Lenkmoment (τ_{δ}) aus der Differenz zwischen Lenkwinkel (δ) und Rotorwinkel ermittelt wird.

7. Verfahren nach Anspruch 6, **dadurch gekennzeichnet, daß** der virtuelle Drehmomentsensor (54) als Recheneinheit ausgebildet ist, durch welche Sensorsignale digital verarbeitet werden.

8. Verfahren nach Anspruch 6, **dadurch gekennzeichnet, daß** der virtuelle Drehmomentsensor (54) als analoger Schaltkreis ausgebildet ist, durch welche Sensorsignale analog verarbeitet werden.

9. Verfahren nach einem der Ansprüche 6 bis 8, **dadurch gekennzeichnet, daß** die Sensoreinheit (52) zur Erfassung des Rotorwinkels als optischer oder magnetostriktiver Encoder ausgebildet ist.

10. Verfahren nach einem der Ansprüche 6 bis 9, **dadurch gekennzeichnet, daß** die Sensoreinheit (53) zur Erfassung des Lenkwinkels (δ) in dem Lenkmittel (1) integriert ist.

## Claims

1. Device for measuring torque for an electromechanical steering system, comprising a steering means (1) which has a drive connection to a steering mechanism via a torsion bar having an input shaft part (101) and an output shaft part (102), and an electric servo motor (2) for driving the steering mechanism, a drive provided by the servo motor (2) bringing about a relative rotational movement between the input shaft part (101) and the output shaft part (102), the electromechanical steering system comprising a sensor unit (53) for measuring a steering angle (δ) and a sensor unit (52) for measuring a rotor angle of the servo motor (2) and being embodied with a virtual torque sensor (54), and it being possible for a steering torque (τ_{δ}) to be determined in the virtual torque sensor from the steering angle (δ) and the rotor angle, **characterized in that** the steering torque (τ_{δ}) is determined from the difference between the steering angle (δ) and the rotor angle.

2. Device according to Claim 1, **characterized in that** the virtual torque sensor (54) is embodied as a processing unit.

3. Device according to Claim 1, **characterized in that** the virtual torque sensor (54) is embodied as an analogue circuit.

4. Device according to one of the preceding claims, **characterized in that** the sensor unit (52) for measuring the rotor angle is embodied as an optical or magnetostrictive encoder.

5. Device according to one of the preceding claims, **characterized in that** the sensor unit (53) for measuring the steering angle (δ) is integrated in the steering means (1).

6. Method for measuring torque for an electromechanical steering system, comprising a steering means (1) which has a drive connection to a steering mechanism via a torsion bar (10) having an input shaft part (101) and an output shaft part (102), and an electric servo motor (2) for driving the steering mechanism, a drive provided by the servo motor (2) bringing about a relative rotational movement between the input shaft part (101) and the output shaft part (102), the electromechanical steering system comprising a sensor unit (53) for measuring a steering angle (δ) and a sensor unit (52) for measuring a rotor angle of the servo motor (2) and being embodied with a virtual torque sensor (54), and it being possible for a steering torque (τ_{δ}) to be determined in the virtual torque sensor from the steering angle (δ) and the rotor angle, **characterized in that** the steering torque (τ_{δ}) is determined from the difference between the steering angle (δ) and the rotor angle.

7. Method according to Claim 6, **characterized in that** the virtual torque sensor (54) is embodied as a processing unit, by means of which sensor signals are processed digitally.

8. Method according to Claim 6, **characterized in that** the virtual torque sensor (54) is embodied as an analogue circuit, by means of which sensor signals are processed in an analogue manner.

9. Method according to one of Claims 6 to 8, **characterized in that** the sensor unit (52) for measuring the rotor angle is embodied as an optical or magnetostrictive encoder.

10. Method according to one Claims 6 to 9, **characterized in that** the sensor unit (53) for measuring the steering angle (δ) is integrated in the steering means (1).

## Revendications

1. Dispositif de mesure du couple pour une direction électromécanique comprenant un moyen de direction (1) qui est relié en vue d'un entraînement avec un mécanisme de direction par le biais d'une barre de torsion comprenant une partie d'arbre d'entrée (101) et une partie d'arbre de sortie (102), et un servomoteur électrique (2) destiné à entraîner le mécanisme de direction, un mécanisme d'entraînement effectuant par le biais du servomoteur (2) un déplacement rotatif relatif entre la partie d'arbre d'entrée (101) et la partie d'arbre de sortie (102), la direction électromécanique comprenant une unité de détection (53) pour détecter un angle de direction (δ) ainsi qu'une unité de détection (52) pour détecter un angle de rotor du servomoteur (2) et étant réalisée avec un capteur de couple virtuel (54), et un moment de direction (τ_{δ}) pouvant être déterminé dans le capteur de couple virtuel à partir de l'angle de direction (δ) et l'angle du rotor, **caractérisé en ce que** le moment de direction (τ_{δ}) est déterminé à partir de la différence entre l'angle de direction (δ) et l'angle du rotor.

2. Dispositif selon la revendication 1, **caractérisé en ce que** le capteur de couple virtuel (54) est réalisé sous la forme d'une unité de calcul.

3. Dispositif selon la revendication 1, **caractérisé en ce que** le capteur de couple virtuel (54) est réalisé sous la forme d'un circuit analogique.

4. Dispositif selon l'une des revendications précédentes, **caractérisé en ce que** l'unité de détection (52) destinée à détecter l'angle du rotor est réalisée sous la forme d'un codeur optique ou magnétostrictif.

5. Dispositif selon l'une des revendications précédentes, **caractérisé en ce que** l'unité de détection (53) destinée à détecter l'angle de direction (δ) est intégrée dans le moyen de direction (1).

6. Procédé de mesure du couple pour une direction électromécanique comprenant un moyen de direction (1) qui est relié en vue d'un entraînement avec un mécanisme de direction par le biais d'une barre de torsion comprenant une partie d'arbre d'entrée (101) et une partie d'arbre de sortie (102), et un servomoteur électrique (2) destiné à entraîner le mécanisme de direction, un mécanisme d'entraînement effectuant par le biais du servomoteur (2) un déplacement rotatif relatif entre la partie d'arbre d'entrée (101) et la partie d'arbre de sortie (102), la direction électromécanique comprenant une unité de détection (53) pour détecter un angle de direction (δ) ainsi qu'une unité de détection (52) pour détecter un angle de rotor du servomoteur (2) et étant réalisée avec un capteur de couple virtuel (54), et un moment de direction (τ_{δ}) étant déterminé dans le capteur de couple virtuel à partir de l'angle de direction (δ) et l'angle du rotor, **caractérisé en ce que** le moment de direction (τ_{δ}) est déterminé à partir de la différence entre l'angle de direction (δ) et l'angle du rotor.

7. Procédé selon la revendication 6, **caractérisé en ce que** le capteur de couple virtuel (54) est réalisé sous la forme d'une unité de calcul qui traite les signaux du capteur de manière numérique.

8. Procédé selon la revendication 6, **caractérisé en ce que** le capteur de couple virtuel (54) est réalisé sous la forme d'un circuit analogique qui traite les signaux du capteur de manière analogique.

9. Procédé selon l'une des revendications 6 à 8, **caractérisé en ce que** l'unité de détection (52) destinée à détecter l'angle du rotor est réalisée sous la forme d'un codeur optique ou magnétostrictif.

10. Procédé selon l'une des revendications 6 à 9, **caractérisé en ce que** l'unité de détection (53) destinée à détecter l'angle de direction (δ) est intégrée dans le moyen de direction (1).
